# EUROPÄISCHE PATENTANMELDUNG

(11) **EP 1 164 475 A2**
(43) Veröffentlichungstag der Anmeldung: **19.12.2001**
(21) Anmeldenummer: 01111400.6
(22) Anmeldetag: 10.05.2001
(51) Int. Cl.: G06F 9/445

(54) **Verfahren zur Installation von Software in einer Hardware**

(30) Priorität: 08.06.2000 DE 10028500
(71) Anmelder: Deutsche Telekom AG, 53113 Bonn (DE)
(72) Erfinder: Martin, Tobias, 35466 Rabenau (DE); Schwenk, Jörg Dr., 64807 Dieburg (DE)

(57) **Zusammenfassung**

Die Erfindung betrifft ein Verfahren zur Installation von Software in einer Hardware, bei dem die Softwaredaten in mehreren Verfahrensschritten (16 bis 24) in einem mit der Hardware (10) zusammenwirkenden Speicher (14) gespeichert werden, wobei mit der Installation eine Kennung (s) eingelesen, diese mit den Softwaredaten verknüpft und zusammen mit diesen in dem Speicher (14) abgespeichert wird. Die Erfindung zeichnet sich dadurch aus, dass die Kennung zumindest auf einem hardwarebezogenen Wert (h) basiert, wie Registryeinträge, Festplattenstruktur, Festplattenseriennummer, Prozessorseriennummer, Pfadnamen und/oder ähnlichem. Insbesondere signiert ein Softwarebevollmächtigter (26) die Werte über ein Telekommunikationsnetz (24) und hinterlegt die Signatur in seinem Speicher (28).

## Beschreibung

Die Erfindung betrifft ein Verfahren zur Installation von Software in einer Hardware gemäß der im Oberbegriff des Anspruches 1 angegebenen Art sowie eine Vorrichtung zur Durchführung des Verfahrens gemäß dem Anspruch 13.

Es ist bekannt, Software von einer CD-ROM oder von einem Server über das Internet in einer Hardware, wie einem Computer, zu installieren. Für die Installation startet in der Regel zunächst ein Assistentenprogramm für die Installation, das den Nutzer, der die Software in der Hardware installiert haben will, durch die einzelnen Installationsschritte über den Bildschirm, die Tastatur und/oder Maus des Computers interaktiv führt.

Zu Beginn der Installation erfolgt eine Abfrage nach einer Seriennummer, die der Nutzer aus dem mit dem Softwarevertreiber/Softwarebevollmächtigten abgeschlossenen Lizenzvertrag entnimmt. Gegebenenfalls erfolgt noch eine zusätzliche Abfrage nach personenbezogenen Daten des Nutzers. Der Nutzer der Software muss nun seine vom Softwarebevollmächtigten aus dem Lizenzvertrag übermittelte Seriennummer und ggf. seinen Namen oder andere personenbezogene Daten eingeben. Diese Werte werden eingelesen und bilden eine Kennung, die mit den Softwaredaten verknüpft in einem Speicher des Computers abgespeichert wird.

Ein Kopieren der auf dem Computer installierten und mit der Kennung verknüpften Software ist in der Regel ohne Kenntnis der Kennung, also der Seriennummer, nicht möglich, da bei jeder Installation die Kennung eingegeben werden muss. Zudem können Kopien von der auf dem Rechner aufgespielten Version der Software auf die Ursprungskopie aufgrund der aus dem Lizenzvertrag stammenden Seriennummer, die mit den Softwaredaten verknüpft und dann entsprechend mitkopiert wurde, zurückverfolgt werden.

Dieses Verfahren hat jedoch mehrere Nachteile. Zum einen kann eine Mehrfachinstallation der Software auf mehrere Computer nicht verhindert werden. Beispielsweise kann der Nutzer ohne weiteres bei jeder Installation der Software die gleiche Kennung eingeben, so dass vielfache Installationen unter der gleichen Kennung möglich sind. Des Weiteren ist die Eingabe des Namens auch keine zwingend personengebundene Zuordnung, da den Kunden nichts daran hindert, ein beliebiges Pseudonym statt seines Namens einzugeben oder seine personengebundenen Daten weiterzugeben. Zudem kann die Abfrage der eindeutigen Seriennummer von versierten Hackern umgangen und so eine frei kopierbare Version der Software hergestellt werden, sodass auch ein Zurückverfolgen auf die Ursprungskopie dann nicht mehr möglich ist.

Beispielsweise aus dem Buch "Moderne Verfahren der Kryptographie", Beutelspacher, Schwenk, Wolfenstetter, 3. Auflage, Vieweg 2000, S. 10 ff ist es bekannt, einen unmanipulierbaren Fingerabdruck von Nachrichten oder Werten mittels einer Einweg-Hashfunktion herzustellen. Eine Einweg-Hashfunktion ist eine kollisionssichere Einwegfunktion, die Nachrichten beliebiger Länge auf einen Hashwert fester Länge, beispielsweise 128 Bit, komprimiert. Man nennt Einweg-Hashfunktionen manchmal auch kryptographische Hashfunktionen. Diese Hashfunktionen entsprechen etwa der Vorstellung eines Fingerabdrucks: Aus einem Fingerabdruck kann ich nicht auf den zugehörigen Menschen schließen, und keine zwei Personen haben den selben Fingerabdruck.

Aus dem selben Buch ist ebenfalls die digitale Signatur bekannt. Das Ziel einer digitalen Signatur oder elektronischen Unterschrift ist es, einige wesentliche Eigenschaften der handschriftlichen Unterschrift in elektronischer Form zu realisieren. Die Funktionsweise eines Signaturschemas kann man sich am Modell eines gläsernen Tresors verdeutlichen. Nur der Eigentümer des Tresors besitzt den Schlüssel zum Öffnen, nur er kann alle Nachrichten im Tresor deponieren. Daher muss man davon ausgehen, dass jede Nachricht im Tresor nur von dessen Eigentümer stammen kann. Eine Nachricht wird also durch Einschließen in dem gläsernen Tresor signiert und kann dann von jedem anderen Teilnehmer verifiziert werden. Die Bildung einer digitalen Signatur ist deutlich zu unterscheiden von der Anwendung der oben genannten kryptographischen Hashfunktion. Zwar ist auch der Hashwert vom Dokument abhängig, aber eine Hashfunktion ist nicht zwingend persönlich. Hashfunktionen erfüllen somit nicht die Identitätseigenschaft einer persönlichen Unterschrift.

Hashfunktionen spielen aber bei der praktischen Anwendung von Signaturschemata eine wichtige Rolle. Das hat zwei Gründe: zum einen sind die heutigen Signaturverfahren sehr langsam. Man kann mit ihnen nicht lange Dokumente in vernünftiger Zeit signieren. Zum anderen ist die digitale Signatur stets etwa so lang, wie das unterschriebene Dokument; man möchte aber eine kurze Signatur fester Länge haben. Deshalb berechnet man in der Praxis Signaturen auf die folgende Weise: Durch Anwendung einer öffentlichen Hashfunktion h() wird das Dokument m zunächst auf einen Wert h(m) fester Länge komprimiert. Danach wird dieser Hashwert der Signaturfunktion SIG_{A} unterworfen. Nur die Person A kann die Signaturfunktion SIG_{A} anwenden; dazu benötigt sie einen privaten Schlüssel. Das Ergebnis s:=SIG_{A}(h(m)) ist die digitale Signatur des Dokuments m.

Bei der Verifikation mit Hilfe der öffentlich bekannten Verifikationsfunktion VERA bildet man ebenfalls zunächst den Hashwert h(m) und überzeugt sich dann, dass die digitale Signatur s gültig ist, indem man überprüft, ob VER_{A}(h(m),s) = TRUE ist. Dazu benötigt man den öffentlichen Schlüssel P des Signators. Zusätzlich zur Überprüfung der Signatur s muss überprüft werden, ob der öffentliche Schlüssel P gültig ist. Dies geschieht durch Überprüfung des Zertifikats zu P.

Am 13. Juni 1997 wurde vom Deutschen Bundestag das Signaturgesetz verabschiedet. Zusammen mit der am 08. Oktober 1997 von der Bundesregierung beschlossenen Signaturverordnung schafft es einen Rahmen, der es ermöglicht, unter gewissen Voraussetzungen die digitale Signatur einer handschriftlichen Unterschrift rechtlich gleichzustellen.

Der Erfindung liegt die Aufgabe zugrunde, ein Verfahren gemäß der im Oberbegriff des Anspruches 1 angegebenen Art sowie eine Vorrichtung zur Durchführung des Verfahrens derart weiterzuentwickeln, dass unter Vermeidung der genannten Nachteile ein sicherer Kopierschutz gegeben ist und ein Kopieren der Softwaredaten besser überwacht werden kann.

Diese Aufgabe wird für das Verfahren durch die kennzeichnenden Merkmale des Anspruches 1 in Verbindung mit seinen Oberbegriffsmerkmalen und für die Vorrichtung durch den Anspruch 13 gelöst.

Der Erfindung liegt die Erkenntnis zugrunde, dass jede Hardwareumgebung eines Computers unterschiedlich ausgeführt und unterschiedliche Kennzeichnungen aufweist, und diese Hardwareumgebung und Hardwarekennzeichnung einem hardwarebezogenen Wert zugeordnet werden kann. Ist der hardwarebezogene Wert mit den Softwaredaten verknüpft, ist ein weiteres Kopieren nach einer einmaligen Installation in einer Hardware ohne Kenntnis des unzugänglichen hardwarebezogenen Wertes nicht mehr möglich.

Nach der Erfindung basiert daher die Kennung auf einem hardwarebezogenen Wert, wie Registry-Einträge, Festplattenstruktur, Festplattenseriennummer, Prozessorseriennummer, Pfadnamen und/oder ähnlichem. Diese Werte können von dem Softwarenutzer nicht verändert werden. Zudem muss dem Nutzer der Software nicht bekannt sein, wie der hardwarebezogene Wert gebildet wird und welche Werte zur Bildung des hardwarebezogenen Wertes einbezogen und miteinander zu dem hardwarebezogenen Wert verknüpft werden. Hierdurch wird erreicht, dass eine Kopie der Software und somit eine Installation in einer Hardware nur von der Original CD-ROM, von einem ähnlichen Datenträger vom Softwarebevollmächtigten, von dem Server des Softwarebevollmächtigten über das Internet oder in entsprechender Weise erfolgen kann. Die angefertigten Kopien können dadurch besser überwacht werden, da nicht jeder, beispielsweise in einem Unternehmen, Zugriff auf diese Medien hat.

Um eine zusätzliche Sicherung gegen Kopieren einzubauen, kann die Kennung zusätzlich noch auf einem personenbezogenen Wert, wie Name, Vorname, Geburtsdatum oder ähnlichem, basieren. Dieser kann zur Installation zusätzlich eingegeben werden und wird dann ebenfalls mit den Softwaredaten verknüpft.

Gemäß einer Ausführungsform der Erfindung wird der hardwarebezogene Wert und insbesondere zusätzlich der personenbezogene Wert mittels einer Hashfunktion zu einem Hashwert transformiert, wobei die Hashfunktion insbesondere Teil des Installationsprogramms oder Teil des Betriebssystems ist. Dies hat den Vorteil, dass die Kennung eine vorbestimmte Größe, beispielsweise 128 Bit, erhält.

Vor dem Einlesen der Kennung während der Installation werden also zunächst die hardwarebezogenen Daten aus der Hardware gelesen, der hardwarebezogene Wert gebildet und ggf. zusätzlich die personenbezogenen Daten abgefragt und eingegeben, der personenbezogene Wert gebildet, diese Werte mit der Hashfunktion verknüpft und daraus der Hashwert sowie die mit den Softwaredaten verknüpfte Kennung gebildet. Hierdurch werden mehrere Sicherheiten als Kopierschutz geschaffen: der hardwarebezogene Wert, auf den der Nutzer der Software keinen Zugriff hat, vorzugsweise zusätzlich der personengebundene Wert und schlussendlich die Transformation der hardwarebezogenen Werte und gegebenenfalls der personenbezogenen Werte mittels der Hashfunktion zu einem Hashwert.

Damit der Kopierschutz noch weiter erhöht wird, kann der Hashwert mit einem privaten Schlüssel eines Softwarebevollmächtigten digital signiert werden, wobei dieser signierte Wert bei der Installation mit den Softwaredaten verknüpft sowie zusammen mit diesen gespeichert wird. Dadurch wird die mit den Softwaredaten verknüpfte Kennung gebildet. Eine Manipulation der hardwarebezogenen Werte wird dadurch auf einfache Weise verhindert, da eine Veränderung des signierten Wertes für den Nutzer nunmehr unmöglich ist, sondern nur noch für den Softwarebevollmächtigten mittels seines geheimen privaten Schlüssels. Hierdurch sind nun Kopien der Software, auch von den CD-ROMs oder anderen Datenträgern, nur mit Genehmigung - Signierung der entsprechenden Werte - möglich. Eine Kopie kann nunmehr ohne Wissen und Genehmigung - Signierung - des Softwarebevollmächtigten nicht mehr angefertigt werden.

Gemäß einer Ausführungsform der Erfindung kann die Software auch Online über ein Telekommunikationsnetz, wie Festnetz, Funknetz, Internet und/oder ähnliches installiert werden. Dies hat den Vorteil, dass die Kommunikation mit dem Softwarebevollmächtigten, beispielsweise für die digitale Signatur des Hashwertes bzw. der hardwarebezogenen und insbesondere zusätzlich der personenbezogenen Werte, vereinfacht wird.

Damit für das Lesen der hardwarebezogenen Daten nicht separat ein Programm gestartet werden muss, weist das Installationsprogramm eine Funktion zum Lesen der hardwarebezogenen Daten auf.

Um die Installation weiter zu vereinfachen, ist das Installationsprogramm mit einer Funktion versehen, die automatisch nach Bilden des Hashwertes diesen an den Softwarebevollmächtigten übermittelt und eine digitale Signatur für diesen Hashwert vom Softwarebevollmächtigten anfordert und mit Eingang des signierten Hashwertes diesen als Kennung mit den Softwaredaten verknüpft und in dem Speicher abspeichert. Beispielsweise bei einer Online-Installation kann dadurch die Signatur des Hashwertes automatisiert werden. Alternativ hierzu müsste bei einer Offline-Installation der Hashwert über einen Datenträger zum Softwarebevollmächtigten geschickt werden, der diesen wiederum signiert und auf einem Datenträger zum Nutzer der Software schickt, und dieser dann den signierten Hashwert bei der Installation der Software in die Hardware von dem Datenträger einliest. Anschließend wird dann der signierte Hashwert mit den Softwaredaten verknüpft und entsprechend im Speicher abgespeichert.

Gemäß einer Ausführungsform der Erfindung wird eine Überprüfungsfunktion mit Starten der Software begonnen, die ein Aktivieren der Software nur erlaubt, wenn die mit der Software verknüpfte Kennung - erste Kennung - zu einer zweiten Kennung passt, die mit Starten der Software aus den Daten der Hardware und ggf. durch personengebundene Daten gebildet wird. Hierdurch wird gewährleistet, dass jedesmal mit Starten der Software überprüft wird, ob die Software sich auf einem zugelassenen Rechner befindet. Beispielsweise wird auch eine physische Übertragung der Softwaredaten durch Austausch und Installation der Festplatte auf einem anderen Rechner und Starten von diesem Rechner verhindert, da sich die Hardwareumgebung und somit der hardwarebezogene Wert - zweite Kennung - ändert und dieser dann zu dem mit den Softwaredaten verknüpften Wert - erste Kennung - nicht mehr passt.

Wenn die erste Kennung eine Signatur s ist, die von einem Softwarebevollmächtigten erstellt wurde, so besteht die Prüfung, ob diese erste Kennung zur zweiten Kennung m passt, darin, zu überprüfen, ob VER_{A}(h(m),s) = TRUE ist. Dabei ist die erste Kennung der bei der Installation gebildete Wert und die zweite Kennung der bei der Überprüfung gebildete Wert. Beide Kennungen passen dann zusammen, wenn sie gleich sind. Die erste Kennung ist insbesondere die vom Softwarebevollmächtigten gebildete Signatur s des Hashwertes h(m). Die zweite Kennung ist insbesondere der Hashwert h(m'). Beide Kennungen passen zueinander, wenn die Verifikationsfunktion, die als Eingabe die erste Kennung, die zweite Kennung und den öffentlichen Signaturschlüssel des Softwarebevollmächtigten erhält, die Überprüfung dieser Werte positiv beendet.

Insbesondere kann bei einer Diskrepanz von erster und zweiter Kennung automatisch eine neue erste Kennung gebildet werden, indem der neue hardwarebezogene Wert, vorzugsweise zusätzlich der personenbezogene Wert und gegebenenfalls der daraus gebildete Hashwert, ebenfalls vom Softwarebevollmächtigten digital signiert und dann mit den Softwaredaten verknüpft in der neuen Hardwareumgebung abgespeichert wird. Auf einfache Weise wird dadurch jede Kopie dem Softwarebevollmächtigten automatisch gemeldet und kann von diesem erfasst werden.

Um eine ordnungsgemäße Abrechnung der einzelnen Installationen und somit der auf die Hardware aufgespielten Softwaredaten zu ermöglichen, werden vor dem Versenden der digital signierten hardware- und/oder personenbezogenen Werte oder die daraus gebildeten Hashwerte diese zusammen mit dem Nutzer der Software beim Softwarebevollmächtigten registriert. Dadurch wird sichergestellt, dass zum einen der Nutzer der Software eine signierte Version und somit die Voraussetzungen zur Installation der Software erhalten hat und der Softwarebevollmächtigte zum anderen die notwendigen Daten zur Erstellung einer Rechnung an den Nutzer in Händen hat.

Weitere Vorteile, Merkmale und Anwendungsmöglichkeiten der vorliegenden Erfindung zur Installation von Software in einer Hardware ergeben sich aus der nachfolgenden Beschreibung in Verbindung mit dem in der Zeichnung dargestellten Ausführungsbeispiel.

Die Erfindung wird im folgenden anhand des in der Zeichnung dargestellten Ausführungsbeispiels näher beschrieben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet.

### In der Zeichnung bedeutet:

- Fig. 1: eine schematische Darstellung der einzelnen Schritte zur Installation einer Software in einer Hardware gemäß einer Ausführungsform der Erfindung; und
- Fig. 2: eine schematische Darstellung der einzelnen Schritte zum Starten der nach der Erfindung installierten Software.

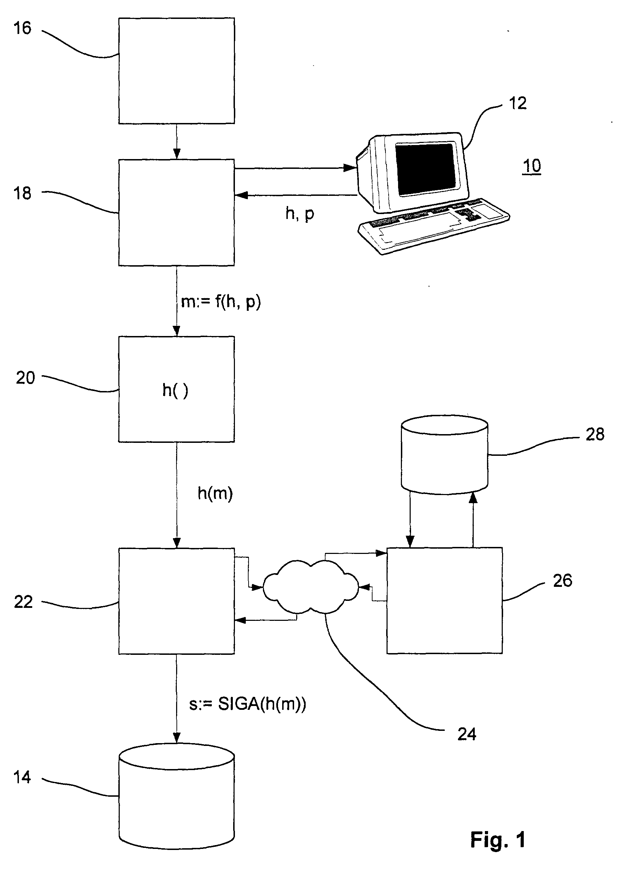

In Fig. 1 sind in einer schematischen Darstellung die einzelnen Schritte zur Installation einer Software in einer Hardware 10 nach der Erfindung dargestellt.

Die Hardware 10 umfasst einen Computer 12 mit einem Speicher 14.

In einem ersten Schritt 16 werden die Softwaredaten entweder Online von einem Server via Internet oder Offline, beispielsweise von einer CD-Rom, in die Hardware 10 eingelesen. Hierfür startet ein Installationsprogramm mit einem Installationsassistenten, der den Nutzer, der die Software auf seinem Computer 12 installiert haben will, interaktiv über Bildschirm und Tastatur des Computers 12 führt.

In einem nächsten Schritt 18 werden die hardwarebezogenen Daten der Hardware 10 erfasst, beispielsweise der Pfadname, die Registry-Einträge, die Festplattenseriennummer, die Prozessorseriennummer und ähnliches, und hieraus über eine Funktion ein hardwarebezogener Wert h gebildet. Zusätzlich kann über den Installationsassistenten von dem Nutzer der Kundenname, das Geburtsdatum oder ähnliches abgefragt und via Tastatur in den Computer 12 eingegeben werden. Diese personenbezogenen Daten werden mittels einer Funktion zu einem personenbezogenen Wert p transformiert. Der Wert m wird aus h und p mittels einer Funktion f gebildet: m:=f(h,p) (z.B. durch Konkatenation m:=h| |p.

In einem nächsten Schritt 20 wird der Wert m mittels einer Hashfunktion h() zu einem Hashwert h(m) transformiert.

Der so gebildete Hashwert h(m) wird nunmehr in einem nächsten Schritt 22 über ein Telekommunikationsnetz 24, wie Festnetz, Funknetz, Internet und/oder ähnliches, dem Rechner des Softwarebevollmächtigten 26 übermittelt, der diesen mit seinem privaten Schlüssel digital signiert und an den Nutzer zurücksendet. Dieser signierte Wert s:=SIG₂₆(h(m)) bildet eine Kennung, die mit den Softwaredaten verknüpft in dem Speicher 14 abgelegt wird. Nachdem die Kennung mit den Softwaredaten verknüpft ist, kann die Installation des Softwareprogramms in der Hardware 10 erfolgen und erfolgreich beendet werden.

Zu Abrechnungszwecken kann der Softwarebevollmächtigte 26 den digital signierten Wert s in einem Speicher 28 ablegen und zwar zusammen mit den notwendigen Daten zur Erstellung einer Rechnung an den Nutzer. Zudem kann er vor Senden des digital signierten Wertes s überprüfen, ob der Nutzer bereits eine installierte Version der Software auf seinem Computer 12 hat, um eine Doppelinstallation und Doppelsignatur zu vermeiden.

Auf dem Computer 12 sind mit der Installation der Software die Softwaredaten mit einem Wert verknüpft, der auf hardwarebezogenen Werten h und personenbezogenen Werten p basiert.

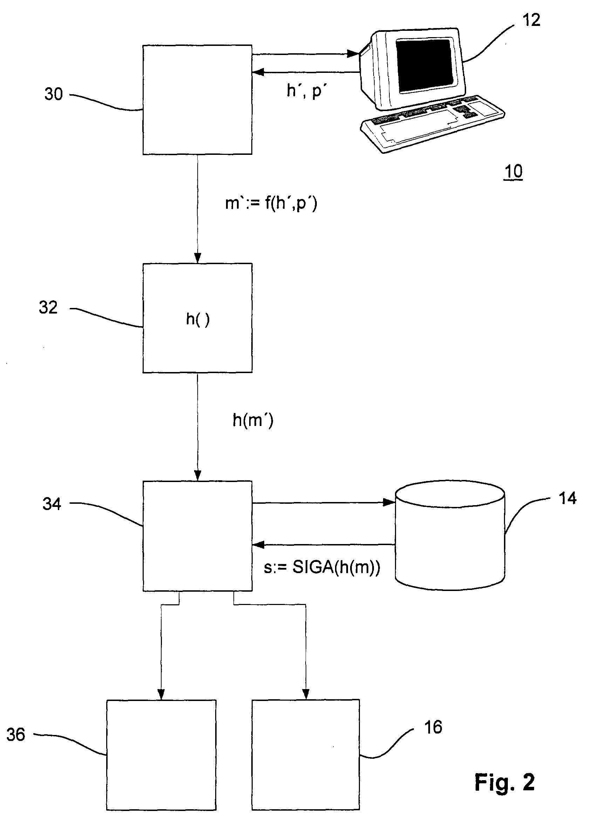

Zum Starten der Software werden gemäß Fig. 2 in einem ersten Schritt 30 die hardwarebezogenen Daten von neuem eingelesen, der hardwarebezogene Wert h' gebildet, sowie ggf. die personenbezogenen Daten vom Nutzer abgefragt und der personenbezogene Wert p' gebildet. Dieser gibt beispielsweise seinen Namen über die Tastatur des Computers 12 ein. Nunmehr werden aus dem hardwarebezogenen Wert h' und dem personenbezogenen Wert p' der Wert m':=f(h',p') gebildet.

Dieser Wert m' wird in einem nächsten Schritt 32 mittels einer Hashfunktion h() zu einem Hashwert h(m') transformiert.

In einem nächsten Schritt 34 wird dieser gebildete Hashwert h(m') mit dem im Speicher 14 mit den Softwaredaten verknüpften, vom Softwarebevollmächtigten 26 digital signierten Hashwert s mit Hilfe der Verifikationsfunktion VER₂₆ verglichen.

Ist VER₂₆(h(m'),s) = TRUE, kann die Software gestartet und genutzt werden - Schritt 36.

Ist VER₂₆(h(m'),s) = FALSE, kann die Software nicht gestartet werden. Ggf. beginnt dann das Installationsprogramm zur Nachlizenzierung zu starten, entsprechend dem in Fig. 1 dargestellten Verfahren - Schritt 16.

Die vorliegende Erfindung macht sich die Tatsache zunutze, dass immer mehr Computer, insbesondere PCs an das Internet angebunden sind. In diesem Fall kann eine Online-Verbindung mit dem Softwarelieferanten, also dem Softwarebevollmächtigten 26, ohne weiteres aufgebaut und Programme einfach herunter geladen werden. Durch Erkenntnisse aus der Kryptographie ist es nunmehr möglich, einfach und schnell einen sicheren Kopierschutz zu installieren.

Neben dem wie oben aus dem hardwarebezogenen und personenbezogenen Wert ermittelten Hashwert, kann dieser zusätzlich auch noch wie bisher auf einer (evtl. Online vergebenen) Seriennummer aus dem Lizenzvertrag basieren.

### Liste der Bezugszeichen

- 10: Hardware
- 12: Computer
- 14: Speicher
- 16: Installation erster Schritt - Einlesen der Soft-ware, Starten des Installationsprogramms und des Installationsassistenten
- 18: Installation zweiter Schritt - Abfragen der hard-ware- und personenbezogenen Daten und Bilden des hardware- und personenbezogenen Wertes
- 20: Installation dritter Schritt - Transformieren des hardwarebezogenen und personenbezogenen Wertes mittels einer Hashfunktion auf einen Hashwert
- 22: Installation vierter Schritt - digitales Signieren des Hashwertes durch einen Softwarebevollmächtigten
- 24: Telekommunikationsnetz
- 26: Softwarebevollmächtigter
- 28: Speicher des Softwarebevollmächtigten
- 30: Starten der Software erster Schritt - Abfrage und Einlesen der hardwarebezogenen und personenbezogenen Daten und Bilden des hardwarebezogenen Wertes sowie des personenbezogenen Wertes
- 32: Starten der Software zweiter Schritt - Transformieren des hardwarebezogenen Wertes und des personenbezogenen Wertes mittels einer Hashfunktion auf einen Hashwert
- 34: Starten der Software dritter Schritt - Vergleichen des mit Starten gebildeten Hashwerts mit dem digital signierten Hashwert aus dem Speicher 14
- 36: Starten der Software vierter Schritt - Starten der Software durch Hochfahren des Programms
- h: hardwarebezogener Wert
- p: personenbezogener Wert
- m: f(h,p)
- h(): Hashfunktion
- h(m): Hashwert
- s: digital signierter Hashwert s:=SIG_{A}(h(m)), digitale Signatur

## Patentansprüche

1. Verfahren zur Installation von Software in einer Hardware, bei dem die Softwaredaten in einem mit der Hardware (10) zusammenwirkenden Speicher (14) gespeichert werden, wobei mit der Installation eine Kennung eingelesen, diese mit den Softwaredaten verknüpft und zusammen mit diesen in dem Speicher (14) abgespeichert wird, **dadurch gekennzeichnet, dass** die Kennung zumindest auf einem hardwarebezogenen Wert (h) basiert, wie Registryeinträge, Festplattenstruktur, Festplattenseriennummer, Prozessorseriennummer, Pfadnamen und/oder ähnlichem.

2. Verfahren nach Anspruch 1, **dadurch gekennzeichnet, dass** die Kennung zusätzlich auf einem personenbezogenen Wert (p), wie Name, Vorname, Geburtsdatum oder ähnlichem, basiert.

3. Verfahren nach Anspruch 1 oder 2, **dadurch gekennzeichnet, dass** der hardwarebezogene Wert (h) und ggf. zusätzlich der personenbezogene Wert (p) mittels einer Hashfunktion (h()) zu einem Hashwert (h(m)) transformiert wird, wobei insbesondere die Hashfunktion (h()) Teil des Installationsprogramms oder Teil des Betriebssystems ist.

4. Verfahren nach Anspruch 3, **dadurch gekennzeichnet, dass** der Hashwert (h(m)), mit einem privaten Schlüssel eines Softwarebevollmächtigten (26) digital signiert wird und dieser signierte Wert (s) die Kennung bildet.

5. Verfahren nach einem der vorangehenden Ansprüche, **dadurch gekennzeichnet, dass** die Software Online über ein Telekommunikationsnetz (24), wie Festnetz, Funknetz, Internet und/oder ähnliches, installiert wird.

6. Verfahren nach einem der vorangehenden Ansprüche, **dadurch gekennzeichnet, dass** das Installationsprogramm eine Funktion (18) zum Lesen der hardwarebezogenen Daten aufweist.

7. Verfahren nach einem der Ansprüche 4 bis 6, **dadurch gekennzeichnet, dass** das Installationsprogramm eine Funktion (22) aufweist, die automatisch nach Bilden des Hashwertes (h(m)) diesen an den Softwarebevollmächtigen (26) übermittelt und eine digitale Signatur (s) für diesen Hashwert (h(m)) vom Softwarebevollmächtigten (26) anfordert und mit Eingang des signierten Hashwertes (s) diesen als Kennung mit den Softwaredaten verknüpft und in dem Speicher (14) abspeichert.

8. Verfahren nach einem der vorangehenden Ansprüche, **dadurch gekennzeichnet, dass** eine Überprüfungsfunktion (34) mit Starten der Software aktiviert wird, die ein Aktivieren der Software nur erlaubt, wenn die mit den Softwaredaten verknüpfte Kennung - erste Kennung (s) - zu einer zweiten Kennung (h(m')) passt, die mit dem Starten der Software aus den Daten der Hardware und ggf. durch personengebundene Daten gebildet wird.

9. Verfahren nach Anspruch 8, **dadurch gekennzeichnet, dass** die erste Kennung (s) der bei der Installation gebildete Wert (h(m)) ist, und die zweite Kennung der bei der Überprüfung gebildete Wert (h(m')) ist, und dass beide Kennungen zueinander passen, wenn sie gleich sind.

10. Verfahren nach Anspruch 8 oder 9, **dadurch gekennzeichnet, dass** die erste Kennung die vom Softwarebevollmächtigten (26) gebildete digitale Signatur (s) des Hashwerts (h(m)) ist, die zweite Kennung der Hashwert (h(m')) ist, und dass die beiden Kennungen zueinander passen, wenn die Verifikationsfunktion (VER), die als Eingabe die erste Kennung (s), die zweite Kennung (h(m')) und den öffentlichen Signaturschlüssel des Softwarebevollmächtigten (26) erhält, die Überprüfung dieser Werte positiv beendet.

11. Verfahren nach einem der Ansprüche 8 bis 10, **dadurch gekennzeichnet, dass** bei Nichtübereinstimmung von erster Kennung (s) und zweiter Kennung (h(m')) eine neue erste Kennung (s) gebildet werden kann, die vom Softwarebevollmächtigten (26) digital signiert und dann mit der Software verknüpft abgespeichert wird.

12. Verfahren nach einem der vorangehenden Ansprüche, **dadurch gekennzeichnet, dass** vor dem Versenden der digital signierten hardware- und/oder personenbezogenen Werte (h, p), oder die daraus gebildeten Hashwerte (h(m)), zusammen mit dem Nutzer der Software beim Softwarebevollmächtigten (26) registriert werden.

13. Vorrichtung zur Durchführung des Verfahrens nach einem der vorangehenden Ansprüche.
